# EUROPÄISCHE PATENTANMELDUNG

(11) **EP 1 359 535 A1**
(43) Veröffentlichungstag der Anmeldung: **05.11.2003**
(21) Anmeldenummer: 03100860.0
(22) Anmeldetag: 01.04.2003
(51) Int. Cl.: G06K 9/00

(54) **Authentifikations-Modul**

(30) Priorität: 23.04.2002 DE 10218120
(71) Anmelder: SIEMENS AKTIENGESELLSCHAFT, 80333 München (DE)
(72) Erfinder: Birchbauer, Josef, 8322, Studenzen (AT); Heschgl, Kurt, 8010, Graz (AT); Marius, Wolfgang, 8043, Graz/Kroisbach (AT); Wachmann, Bernd, 8181, St.Ruprecht (AT); Winter, Martin, 8010, Graz (AT)

(57) **Zusammenfassung**

Die Erfindung betrifft ein Authentifikations-Modul mit einem Fingerprintsensor. Erfindungsgemäß ist ein damit direkt gekoppelter nicht flüchtigen Speicher zur Aufnahme der jeweils aktuellen Merkmalslisten vorgesehen.

## Beschreibung

Die Erfindung betrifft ein Authentifikations-Modul gemäß dem Oberbegriff des Patentanspruchs.

Bei solchen Authentifikations-Modulen werden beispielsweise kapazitive Fingerprint-Sensoren zur Aufnahme der Kapillarbeziehungsweise Fingerlinien eingesetzt. Die bei der normalen Benutzung auf der Sensoroberfläche zurückbleibenden Spuren können durch Manipulation in manchen Fällen ein Nachbild des Fingerabdruckes erzeugen. Dieses Nachbild kann von so hoher Qualität sein, dass es von der Bildverarbeitung akzeptiert wird und auswertbare Merkmale liefert. Unter Umständen können diese Merkmale dem zuletzt anliegenden Finger entsprechen und so zu einer falschen Akzeptanz beziehungsweise einem ungerechtfertigten Zugang führen.

Zur Abwehr von solchen Replay-Attacken können sogenannte Merkmalslisten verwendet werden. Die Merkmalslisten aufeinanderfolgend aufgenommener Fingerabdrücke dürfen dabei ein bestimmtes Ähnlichkeitsmaß nicht überschreiten. Es wird beispielsweise gefordert, dass sich die Bilder hinsichtlich Translation und Verdrehung um einen Mindestbetrag unterscheiden müssen. Zusammen mit einer entsprechenden Benutzerführung wird damit erreicht, dass der Benutzer den Finger auf jeden Abfragevorgang in immer neuer Lage präsentiert. Als Speicher für die zuletzt ermittelten Merkmalslisten des Sensors die in üblicherweise Hauptspeicher und lokale Peripherie einer Computeranlage oder eines Zugangssystems.

Diese Vorgehensweise eröffnet eine Reihe von Angriffsmöglichkeiten. So kann ein Speicherabbild der zuletzt gespeicherten Merkmalslisten durch vorübergehendes Ausschalten des Rechners, ein Plattenabbild durch Manipulation im Dateisystem gelöscht oder verändert werden.

Der Erfindung liegt die Aufgabe zugrunde, den Erfolg solcher Replay-Attacken zu verhindern.

Diese Aufgabe wird erfindungsgemäß durch die im Patentanspruch angegebenen Merkmale gelöst.

Das erfindungsgemäße Authentifikations-Modul kann als Fingerprint-Sensor mit Gedächtnisfunktion bezeichnet werden.

Im folgenden wird die Erfindung anhand eines Ausführungsbeispiels näher beschrieben.

Die Erfindung geht aus von einem Authentifikations-Modul mit einem Fingerprint-Sensor.

Erfindungsgemäß wird auf dem Sensordevice ein mit dem Sensor direkt gekoppelter, nichtflüchtiger Speicher vorgesehen. Dieser Speicher ist sozusagen in den Sensor integriert. Hierdurch wird eine wesentlich höhere Sicherheit gegenüber Manipulationen, wie eine Replay-Attacke, geboten.

Weitere wichtige Vorteile sind eine feste Bindung des zuletzt mit dem Modul erzeugten Bildes mit der daraus abgeleiteten biometrischen Information. In gleicher Weise kann Information über die zu Ermittlung dieser Information verwendete Software an das Modul gebunden werden.

Ein weiterer Vorteil ist die Auslagerung sicherheitsrelevanter Informationen von einem Rechner in die weniger angreifbare Peripherie.

Das erfindungsgemäße Authentifikations-Modul bietet weiter Sicherheit gegen Spannungsverlust und ist kombinierbar mit kryptografischen Schlüsseln und Protokollen.

## Patentansprüche

1. Authentifikations-Modul
mit einem Fingerprintsensor,
**gekennzeichnet durch**
einen damit direkt gekoppelten nicht flüchtigen Speicher zur Aufnahme der jeweils aktuellen Merkmalslisten.
